# EUROPEAN PATENT SPECIFICATION

(11) **EP 2 775 344 B1**
(45) Date of publication and mention of the grant of the patent: **05.09.2018**
(21) Application number: 11876957.9
(22) Date of filing: 08.12.2011
(51) Int. Cl.: G02F 1/1333

(54) **CURVED DISPLAY PANEL MANUFACTURING METHOD**
VERFAHREN ZUR HERSTELLUNG EINER GEKRÜMMTEN ANZEIGETAFEL
PROCÉDÉ DE FABRICATION DE PANNEAU D'AFFICHAGE INCURVÉ

(43) Date of publication of application: 10.09.2014
(73) Proprietor: Tovis Co., Ltd., Yeonsu-gu, Incheon 406-840 (KR)
(72) Inventor: KIM, Yong-Beom, Incheon 406-840 (KR); KIM, Yang-Rae, Incheon 406-736 (KR)
(74) Representative: Manitz Finsterwald Patentanwälte PartmbB
(86) International application number: PCT/KR2011/009482
(87) International publication number: WO 2013/085084

(56) References cited:
- WO-A1-2010/125976
- WO-A2-2011/108848
- JP-A- 2003 280 548
- JP-A- 2006 106 603
- JP-A- 2010 097 028
- KR-A- 20050 085 066
- KR-A- 20110 030 732
- KR-A- 20110 100 537
- US-A1- 2009 284 904

## Description

### [Technical Field]

The present invention relates to a curved display panel manufacturing method for manufacturing a display panel having a curved surface.

### [Background Art]

Various display devices have been developed and are being used. A liquid crystal display device which realizes images using liquid crystal is widely used.

Generally, a liquid crystal display (LCD) includes two display panels and a liquid crystal layer disposed therebetween and having a dielectric anisotropy. An electric filed is formed in the liquid crystal layer, and a transmittance of light passing the liquid crystal layer is regulated by regulating amplitude of the electric field so as to obtain a desired image. Such a liquid crystal display is representative one of a flat panel display (FPD), and TFT-LCD which uses thin film transistor (TFT) as a switching element is widely used.

A plurality of display signal lines i.e., gate lines and data lines, a plurality of thin film transistors and pixel electrodes are formed on a lower display panel of the two display panels of the liquid crystal display panel, and a color filter and a common electrode are formed on an upper display panel.

Such a liquid crystal display panel is generally manufactured in a flat shape, so the conventional liquid crystal display panel cannot be used as a curved display.

In order to solve this problem, a flexible liquid crystal display panel which has flexible substrates instead of glass substrates of a conventional liquid crystal display panel so as to be bent by external bending force has been developed. However, there is a problem that the manufacturing process of the conventional flexible liquid crystal display panel is difficult and the manufacturing cost thereof is high.

Meanwhile, a method for manufacturing a curved display panel of paring glass substrates of a flat display panel by etching so as to be bendable and then fixing the display panel in a state of being bent to a desired curved shape has been introduced. However, according to this method, in a process of paring and bending the glass substrates, two facing substrates at outer end portions of forming a curved surface become farther from one another, so outer end portion of the substrate to be bent to be concave may be deformed, so that the two substrates may be separated from one another. Such a separation of the two substrates may cause a phenomenon of collapse of a cell gap between the two substrates.

WO 2011/108848 A2 describes a method in accordance with the preambles of claims 1 and 2.

Further prior art methods of manufacturing curved display panels are taught in WO 2010/125976 A1 and US 2009/0284904 A1, which describes a manufacturing method for curved display panels in which a liquid crystal display panel is bonded to a fixing substrate and a bending force applied to the fixing substrate, as opposed to the display panel itself, to create a display panel having a desired curved shape.

### [Detailed Description of the Invention]

### [Technical Problem]

The present invention has been made in an effort to provide a curved display panel manufacturing method in which a phenomenon of separation of two substrates during paring and bending glass substrates facing one another can be prevented.

### [Technical Solution]

The method of manufacturing a curved display panel according to the present application is defined by the appended claims.

### [Advantageous Effects]

According to the present invention, in a method of forming a curved display panel by paring and bending the substrates, since fixing layers are formed on edge areas near edges which are not bent in a state of being formed to the desired curved shape after paring the substrates, the collapse of cell gap which may be caused by the phenomenon that the two substrates are separated while the pared substrates are being bent so that the substrate which is disposed at a concave side of the curved display panel may be irregularly deformed can be prevented.

### [Brief Description of Drawings]

FIG. 1 is a schematic perspective view of a curved display panel formed by a curved display panel manufacturing method according to an embodiment of the present invention.
FIG. 2 is a cross sectional view taken along a line II-II in FIG. 1.
FIG. 3 is a drawing for explaining a process of partially paring outer surfaces a flat display panel in a curved display panel manufacturing method according to an embodiment of the present invention.
FIG. 4 is a drawing for explaining a process of attaching polarizers at outer surfaces of a display panel in a curved display panel manufacturing method according to an embodiment of the present invention.
FIG. 5 is a drawing for forming a fixing layer on outer surfaces of a display panel in a curved display panel manufacturing method according to an embodiment of the present invention.
FIG. 6 is a drawing for explaining a process of attaching reinforcing plates on outer surfaces of a display panel in a curved display panel manufacturing method according to an embodiment of the present invention.
FIG. 7 is a sectional view of a curved display panel which is formed by a curved display panel manufacturing method according to another embodiment of the present invention.

### [Detailed Description of the Embodiments]

Embodiments of the present invention will now be described hereinafter with reference to the accompanying drawings.

In the drawings, the thickness of layers, regions, etc. are exaggerated for clarity. Like reference numerals designate like elements throughout the specification. It will be understood that when an element such as a layer or a film is referred to as being "in front of" or "behind" another element, it can be directly in front of the other element or intervening elements may also be present. In contrast, when an element is referred to as being "directly in front of" or "directly behind" another element, there are no intervening elements present.

A curved display panel manufacturing method according to the present invention relates to a method which forms a display panel having a desired curved shape using a conventional flat display panel having two substrates facing one another. For example, the display panel having a desired curved shape can be fabricated from a liquid crystal display panel which includes two substrates facing one another and a liquid crystal layer formed therebetween. A method for manufacturing a curved display panel using a liquid crystal display panel will be explained.

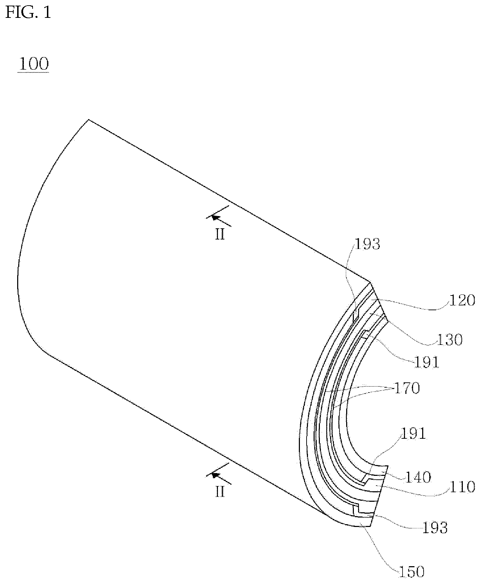

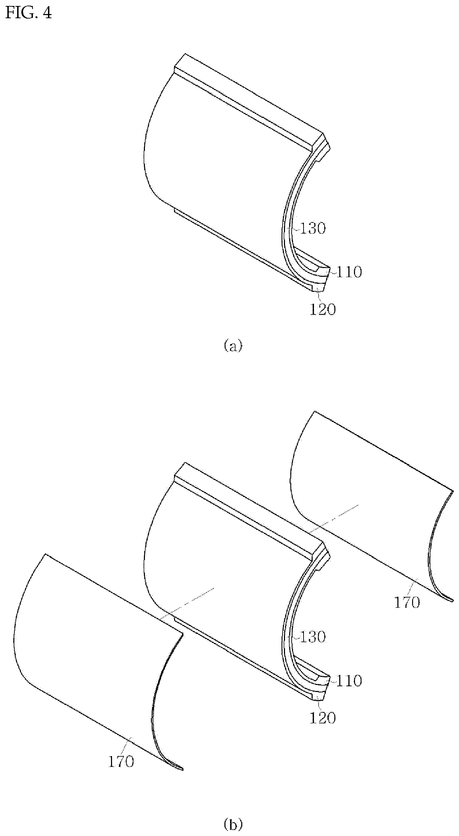

As shown in FIG. 1 to FIG. 6, a method for manufacturing a curved display panel according to an embodiment of the present invention forms a display panel 100 having a desired curved shape using a flat display panel 100a (referring to FIG. 4) having a first substrate 110 and a second substrate 120 facing each other and a liquid crystal layer 130 having liquid crystals aligned in a vertical or parallel direction with respect to the two substrates 110 and 120.

The first substrate 110 may be referred to as a thin film transistor array substrate, and the second substrate 120 may be referred to as a color filter array substrate. The first substrate 110 and the second substrate may be formed of glass respectively.

Meanwhile, not shown in the drawing, at edges of the two substrates 110 and 120, a sealant which is made of material for bonding the two substrates 110 and 120 and forms a space which is filled with liquid crystal may be disposed, and the liquid crystal is prevented from being leaked by the sealant.

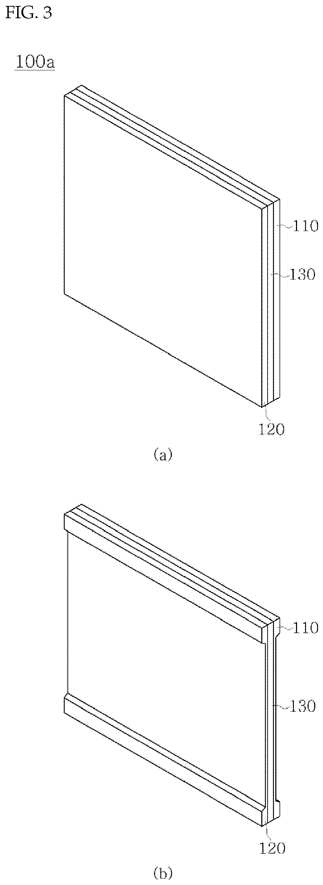

A method for forming a curved display panel according to an embodiment of the present invention will be explained hereinafter in detail with reference to FIG. 3 to FIG. 6.

A method for manufacturing a curved display panel according to an embodiment of the present invention includes paring outer portions of the first substrate 110 and the second substrate 120 respectively so as to reduce thicknesses thereof to predetermined thicknesses. That is, as shown in (a) of FIG. 3, by removing outer portions of the first substrate 110 and the second substrate 120 of the conventional flat type liquid crystal display panel 100a, a shape of (b) of FIG. 3 is obtained.

At this time, in the step of paring outer portions ((a) to (b) in FIG. 3), a method of paring the first substrate 110 and the second substrate 120 may be any one of methods known in the art. For example, it may be a mechanical polishing method or an etching method using etchant.

When the outer portion of the first substrate 110 and the second substrate 120 are pared, edge portions near the edges which are not bent in the desired curved shape may not be removed. That is, as shown in (b) of FIG. 3, the upper and lower portions of the first substrate 110 and the second substrate 120 may be not pared. This may protect the driving circuits such as PCB(Printed Circuit Board) to which a driver for driving the liquid crystal panel and various circuit elements are connected may be connected to the upper and lower edges of the substrates. In addition, not paring the upper and lower edges of the substrates, the upper and lower edge portions may play a role of a guide for members which will be attached in the subsequent processes, and may play a role of enhancing the structural strength of the curved-surface display panel.

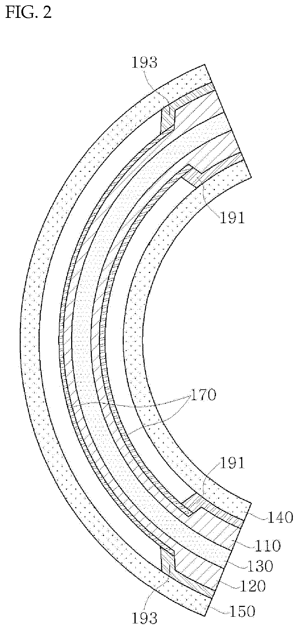

The desired curved shape may be a round bracket or a curved shape without an inflection point as shown in FIG. 1 and FIG. 2, and may be an S-shaped curve or a curved shape having one or more inflection points. That is, the desired curved shape may be variously altered.

Further, in the paring step (from (a) to (b) of FIG. 3), the predetermined thickness may be within a range of 50 to 150µm. If the thicknesses of the first substrate 110 and the second substrate 120 after being pared is less than 50 µm or greater than 200 µm, they may be broken during being bent or may be difficult to be bent. That is, since the thickness of the first substrate 110 and the second substrate 120 after being pared is between 50 to 150 µm, the first substrate 110 and the second substrate 120 can be bent without being broken.

Meanwhile, a method for manufacturing a curved display panel according to an embodiment of the present invention further includes the step of attaching one or more polarizers 170 on at least one of the pared outer surfaces of the first substrate 110 and the second substrate 120 in a state that the first substrate 110 and the second substrate 120 are bent to have the desired curved shape.

As shown in FIG. 2 and FIG. 4, the polarizer 170 can be attached to the pared outer surfaces of the first substrate 110 and the second substrate 120 respectively, but can be attached to only one of the outer surfaces of the first substrate 110 and the second substrate 120.

Meanwhile, according to another embodiment of the present invention, the polarizer 170 may also be attached to the outer surface of reinforcing plates 140 and 150, which will be described later, instead of the outer surfaces of the first substrate 110 and the second substrate 120.

Further, according to the present invention, the curved display manufacturing method includes forming fixing layers 191 and 193 at edge areas near unbent edges among outer edges of the first substrate 110 and the second substrate 120. That is, referring to FIG. 1, FIG. 2 and FIG. 5, the fixing layers 191 and 193 which are respectively extended in an inward direction from edges in areas (areas near an upper end and a lower end of the drawings) near edges which are unbent are formed.

In accordance with the invention, the fixing layers 191 and 193 are formed in a state that the first substrate 110 and the second substrate 120 are bent. The fixing layers 191 and 193 may also be formed at areas near edges which are not bent after the polarizer 170 is attached in a state of (b) of FIG. 3.

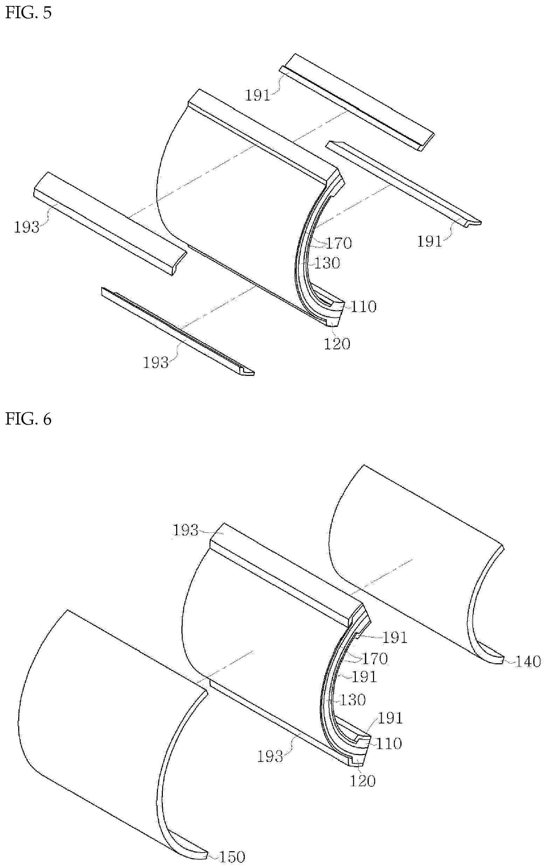

Also, it is exemplarily shown in FIG. 4 and FIG. 5 that the fixing layers 191 and 193 are formed after attaching the polarizers 170 to the first substrate 110 and the second substrate 120, but the fixing layers 191 and 193 may be formed before attaching the polarizers 170 to the pared first and second substrates 110 and 120. That is, not according to the invention, the fixing layers 191 and 193 may be formed at edge areas (edge areas of upper and lower ends) in a state of (b) of FIG. 3, and, according to the invention, are formed at edge areas after being bent to a desired curved shape in the state of (b) of FIG. 3.

At this time, as shown in the drawing, the fixing layers 191 and 193 are formed to cover the edge areas which are not pared and a portion of the pared area of the first substrate 110 and the second substrate 120.

Meanwhile, the fixing layers 191 and 193 may be formed by curing ultraviolet-curable resin or thermosetting resin or by using OCA (optically clear adhesive). Meanwhile, the fixing layers 191 and 193 may be any material which can fix the substrates 110 and 120 to prevent the collapse of the cell gap.

Light-transparent reinforcing plates 140 and 150 having the same shape with the desired curved surface shape to the display panel 100a in a state that the display panel 100a outer portions of which are partially pared is curved to the desired curved shape are attached. At this time, although it is shown in the drawing that the reinforcing plates 140 and 150 are provided respectively on both outer surfaces of the first substrate 110 and the second substrate 120, the reinforcing plates 140 and 150 may be provided on only one of the outer surfaces of the first substrate 110 and the second substrate 120. For example, the reinforcing plate may be provided only on the front surface of the second surface 120 which is closed to a person who sees the display screen among the first substrate 110 and the second substrate 120.

Further, the reinforcing plates 140 and 150 may be attached to the display panel 100a by attaching to adhesive layers which are respectively formed along edges of outer surfaces of the first substrate 110 and the second substrate 120 in a state that the display panel 100a is bent to the desired curved shape.

The reinforcing plates 140 and 150 may be formed of material having a good light transmitting characteristics, for example materials such as glass or PMMA(PolyMethly MethAcrylate). At this time, the reinforcing plates 140 and 150 may have the same curved shape with the desired curved shape of the curved-surface display panel, and may have strength to maintain the curved shape. As such, after paring outer surfaces of the conventional flat liquid crystal display panel to be flexible and bending the same in a desired curve shape, by attaching the reinforcing plates 140 and 150 having the same curve shape onto the outer surfaces of the bent liquid crystal panel 100a, the curved-surface display panel having the desired curved shape can be formed.

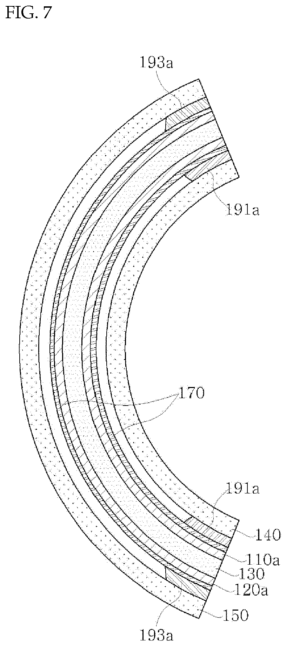

Meanwhile, FIG. 7 is a sectional view of a curved display panel which is formed by a curved display panel manufacturing method according to another embodiment of the present invention.

Referring to FIG. 7, according to another embodiment of the present invention, the entire outer surfaces of a first substrate 110a and a second substrate 120a are partially pared, and fixing layers 191a and 193a are formed on edge area near edges which are not bent to the curved surface among edge areas of the pared first substrate 110a and the second substrate 120.

As described above, in a method of forming a curved display panel by paring and bending the substrates, since fixing layers are formed on edge areas which are not bent in a state of being formed to the desired curved shape after paring the substrates, the collapse of cell gap which may be caused by the phenomenon that the two substrates are separated while the pared substrates are being bent so that the substrate which is disposed at a concave side of the curved display panel may be irregularly deformed can be prevented.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### [Industrial Applicability]

The present invention relates to a method for manufacturing a display panel of a curved shape and can be applied to a manufacturing method for various display devices, so the present invention has an industrial applicability.

## Claims

1. A curved display panel manufacturing method for manufacturing a curved display panel (100) having a curved shape using a flat display panel (100a) having a first substrate (110) and a second substrate (120) facing one another, comprising:
paring partially outer portions of the first substrate (110) and the second substrate (120) so as to reduce thicknesses thereof to predetermined thicknesses;
bending the pared first and second substrates (110, 120) to a desired curved shape, wherein the desired curved shape leaves some edges of the first and second substrates unbent, wherein outer portions of the first substrate (110) and the second substrate (120) are partially pared so that the edge areas near said unbent edges remain without being pared; and
attaching a light-transparent reinforcing plate (140, 150) having the same shape as the desired curved shape to the display panel in a state in which the first and second substrates (110, 120) are bent to the desired curved shape,
**characterized by**
forming fixing layers (191, 193) at said edge areas in the state in which the first and second substrates (110, 120) are bent to the desired curved shape, wherein the fixing layers (191, 193) are formed to cover said edge areas and portions of the pared areas of the first substrate (110) and the second substrate (120) wherein the fixing layers fix the first and second substrates and prevent the substrate which is disposed at a concave side of the curved display panel to be irregularly deformed.

2. A curved display panel manufacturing method for manufacturing a curved display panel (100) having a curved shape using a flat display panel (100a) having a first substrate (110a) and a second substrate (120a) facing one another, comprising:
paring the entire outer surfaces of the first substrate (110a) and the second substrate (120a) so as to reduce thicknesses thereof to predetermined thicknesses;
bending the pared first and second substrates (110a, 120a) to a desired curved shape, wherein the desired curved shape leaves some edges of the first and second substrates unbent; and
attaching a light-transparent reinforcing plate (140, 150) having the same shape with the desired curved shape to the display panel in a state in which the first and second substrates (110a, 120a) are bent to the desired curved shape,
**characterized by**
forming fixing layers (191a, 193a) at edge areas near said unbent edges in the state in which the first and second substrates (110a, 120a) are bent to the desired curved shape, wherein the fixing layers (191a, 193a) extend in an inward direction from each of the edge areas near said unbent edges and are formed on said unbent edges of the first substrate (110a) and the second substrate (120a) wherein the fixing layers fix the first and second substrates and prevent the substrate which is disposed at a concave side of the curved display panel to be irregularly deformed.

3. The curved display panel manufacturing method of claim 1 or 2, wherein the fixing layers (191, 193; 191a, 193a) are formed by curing ultraviolet-curable resin or thermosetting resin or by using OCA, optically clear adhesive.

## Patentansprüche

1. Verfahren zum Herstellen einer gekrümmten Displaytafel zum Herstellen einer gekrümmten Displaytafel (100), die eine gekrümmte Form aufweist, unter Verwendung einer flachen Displaytafel (100a), die ein erstes Substrat (110) und ein zweites Substrat (120) aufweist, die zueinander weisen, umfassend, dass:
Außenabschnitte des ersten Substrats (110) und des zweiten Substrats (120) teilweise abgeschält werden, um die Dicke derselben auf vorbestimmte Dicken zu reduzieren;
die abgeschälten ersten und zweiten Substrate (110, 120) in eine gewünschte gekrümmte Form gebogen werden, wobei die gewünschte gekrümmte Form einige Ränder des ersten und zweiten Substrats nicht gebogen belässt, wobei Außenabschnitte des ersten Substrats (110) und des zweiten Substrats (120) teilweise abgeschält sind, so dass die Randbereiche nahe den nicht gebogenen Rändern ohne Abschälen zurückbleiben; und
eine Licht transparente Verstärkungsplatte (140, 150), die dieselbe Form wie die gewünschte gekrümmte Form aufweist, an der Displaytafel in einem Zustand befestigt wird, in dem das erste und zweite Substrat (110, 120) in die gewünschte gekrümmte Form gebogen sind,
**dadurch gekennzeichnet, dass** Fixierschichten (191, 193) an den Randbereichen in dem Zustand gebildet werden, in welchem das erste und zweite Substrat (110, 120) in die gewünschte gekrümmte Form gebogen werden, wobei die Fixierschichten (191, 193) so geformt sind, die Randbereiche und Abschnitte der abgeschälten Bereiche des ersten Substrats (110) und des zweiten Substrats (120) zu bedecken, wobei die Fixierschichten die ersten und zweiten Substrate fixieren und verhindern, dass das an einer konkave Seite der gekrümmten Displaytafel angeordnete Substrat unregelmäßig verformt wird.

2. Verfahren zur Herstellung einer gekrümmten Displaytafel zur Herstellung einer gekrümmten Displaytafel (100), die eine gekrümmte Form aufweist, unter Verwendung einer flachen Displaytafel (100a), die ein erstes Substrat (110a) und ein zweites Substrat (120a) aufweist, die einander zugewandt sind, umfassend, dass:
die gesamten Außenflächen des ersten Substrats (110a) und des zweiten Substrats (120a) abgeschält werden, um die Dicken derselben auf vorbestimmte Dicken zu reduzieren;
die abgeschälten ersten und zweiten Substrate (110a, 120a) in eine gewünschte gekrümmte Form gebogen werden, wobei die gewünschte gekrümmte Form einige Ränder des ersten und zweiten Substrats nicht gebogen zurücklässt; und
eine Licht transparente Verstärkungsplatte (140, 150), die dieselbe Form wie die gewünschte gekrümmte Form aufweist, an der Displaytafel in einem Zustand befestigt wird, indem das erste und zweite Substrat (110a, 120a) in die gewünschte gekrümmte Form gebogen sind,
**dadurch gekennzeichnet, dass**
Fixierschichten (191a, 193a) an Randbereichen nahe der nicht gebogenen Ränder in dem Zustand gebildet werden, in welchem das erste und zweite Substrat (110a, 120a) in die gewünschte gekrümmte Form gebogen sind, wobei sich die Fixierschichten (191a, 193a) in einer Einwärtsrichtung von jedem der Randbereiche nahe den nicht gebogenen Rändern erstrecken und an den nicht gebogenen Rändern des ersten Substrats (110a) und des zweiten Substrats (120a) gebildet sind, wobei die Fixierschichten das erste und zweite Substrat fixieren und verhindern, dass das an einer konkaven Seite der gekrümmten Displaytafel angeordnete Substrat unregelmäßig verformt wird.

3. Verfahren zum Herstellen einer gekrümmten Displaytafel nach einem der Ansprüche 1 oder 2, wobei die Fixierschichten (191, 193; 191a, 193a) durch Aushärten eines mit ultraviolettem Licht aushärtbaren Harzes oder eines duroplastischen Harzes oder durch Verwendung von OCA, optisch durchsichtigem Klebstoff, gebildet sind.

## Revendications

1. Procédé de fabrication de panneau d'affichage incurvé pour la fabrication d'un panneau d'affichage incurvé (100) ayant une forme incurvée, en utilisant un panneau d'affichage plat (100a) ayant un premier substrat (110) et un second substrat (120) qui se font mutuellement face, comprenant les étapes consistant à :
amincir partiellement des portions extérieures du premier substrat (110) et du second substrat (120) de manière à réduire leurs épaisseurs à des épaisseurs prédéterminées ;
cintrer le premier substrat et le second substrat amincis (110, 120) a une forme incurvée désirée, de sorte que la forme incurvée désirée laisse non cintrées une partie des bordures du premier et du second substrat, des portions extérieures du premier substrat (110) et du second substrat (120) étant partiellement amincies de telle façon que les zones de bordure proches desdites bordures non cintrées restent sans être amincies ; et
attacher une plaque de renforcement (140, 150) transparente à la lumière ayant la même forme que la forme incurvée désirée du panneau d'affichage dans un état dans lequel le premier substrat et le second substrat (110, 120) sont cintrés à la forme incurvée désirée,
**caractérisé par** l'opération consistant à former des couches de fixation (191, 193) au niveau desdites zones de bordure dans l'état dans lequel le premier substrat et le second substrat (110, 120) sont cintrés à la forme incurvée désirée, lesdites couches de fixation (191, 193) étant formées pour couvrir lesdites zones de bordure et des portions des zones amincies du premier substrat (110,) et du second substrat (120), de sorte que les couches de fixation fixent le premier substrat et le second substrat et empêchent que le substrat qui est disposé sur un côté concave du panneau d'affichage incurvé soit irrégulièrement déformé.

2. Procédé de fabrication de panneau d'affichage incurvé pour la fabrication d'un panneau d'affichage incurvé (100) ayant une forme incurvée, en utilisant un panneau d'affichage plat (100a) ayant un premier substrat (110a) et un second substrat (120a) qui se font mutuellement face, comprenant les étapes consistant à :
amincir les surfaces extérieures entières du premier substrat (110a) et du second substrat (120a) de manière à réduire leurs épaisseurs à des épaisseurs prédéterminées ;
cintrer le premier et le second substrat aminci (110a, 120a) à une forme incurvée désirée, de sorte que la forme incurvée désirée laisse non cintrées une partie des bordures du premier substrat et du second substrat ; et
attacher une plaque de renforcement transparente à la lumière (140, 150) ayant la même forme avec la forme incurvée désirée sur le panneau d'affichage dans un état dans lequel le premier substrat et le second substrat (110a, 120a) sont cintrés à la forme incurvée désirée,
**caractérisé par** l'opération consistant à
former des couches de fixation (191a, 193a) au niveau de zones de bordures proches desdites bordures non cintrées dans l'état dans lequel le premier substrat et le second substrat (110a, 120a) sont cintrés à la forme incurvée désirée, les couches de fixation (191a, 193a) s'étendant dans une direction vers l'intérieur depuis chacune des zones de bordure proches desdites bordures non cintrées et étant formées sur lesdites bordures non cintrées du premier substrat (110a) et du second substrat (120a), de sorte que les couches de fixation fixent le premier substrat et le second substrat et empêchent que le substrat qui est disposé sur un côté concave du panneau d'affichage incurvé soit irrégulièrement déformé.

3. Procédé de fabrication de panneau d'affichage incurvé selon la revendication 1 ou 2, dans lequel les couches de fixation (191, 193 ; 191a, 193a) sont formées par durcissement d'une résine durcissable au rayonnement ultraviolet ou une résine thermodurcissable, ou bien en utilisant un adhésif optiquement transparent.
